# EUROPEAN PATENT APPLICATION

(11) **EP 2 112 777 A2**
(43) Date of publication of application: **28.10.2009**
(21) Application number: 09151941.3
(22) Date of filing: 03.02.2009
(51) Int. Cl.: H04J 3/08, H04L 12/46

(54) **Communication device, communication system and communication method**

(30) Priority: 25.04.2008 JP 2008115293
(71) Applicant: NEC CORPORATION, Tokyo (JP)
(72) Inventor: Nakano, Tomoya, Tokyo 108-8001 (JP); Mori, Yuichi, Tokyo 108-8001 (JP)
(74) Representative: Betten & Resch

(57) **Abstract**

A communication device is provided that includes a first transceiver and a second transceiver. The first transceiver transmits/receives a first signal corresponding to a first communication standard in a frame of the first communication standard. The second transceiver, with a clock synchronized with the first transceiver, processes a second signal corresponding to a second communication standard and transmits/receives the second signal in a frame of the first communication standard.

## Description

This application is based upon and claims the benefit of priority from Japanese Patent Application No. 2008-115293 filed on April 25 2008, the content of which is incorporated by reference.

### BACKGROUND OF THE INVENTION

### 1. Field of the Invention

The present invention relates to technology that performs communication in a plurality of communication modes in a communication network.

### 2. Description of the Related Art:

In order to construct at a low cost a communication network that supports a plurality of communication standards such as SDH (Synchronous Digital Hierarchy) and GbE (Gigabit Ethernet), a method has been used that converts signals that have undergone multiplexing using OMLDX (Optical Multiplex and Demultiplex) or the like into signals for the respective communication standards using a single CWDM (Coarse Wavelength Division Multiplexing) device.

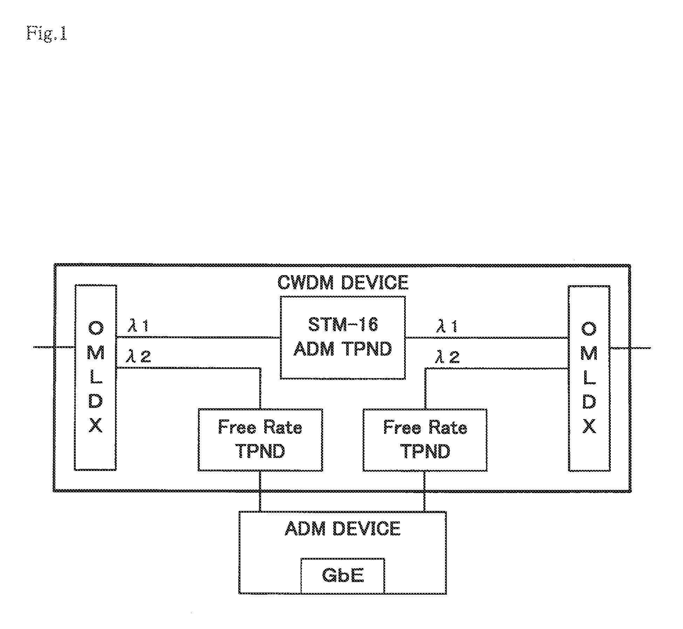

For example, a CWDM device shown in FIG. 1 is configured with a built-in transponder that supports SDH and is connected to an external transponder that supports GbE. The CWDM device thus enables simultaneous performance of SDH communication and GbE communication.

Further, as shown in FIG. 2, a CWDM device disclosed in JP-2001-218240-A is configured with a built-in transponder that supports SDH and a built-in transponder that supports GbE that are connected in parallel, and thereby implements SDH communication and GbE communication.

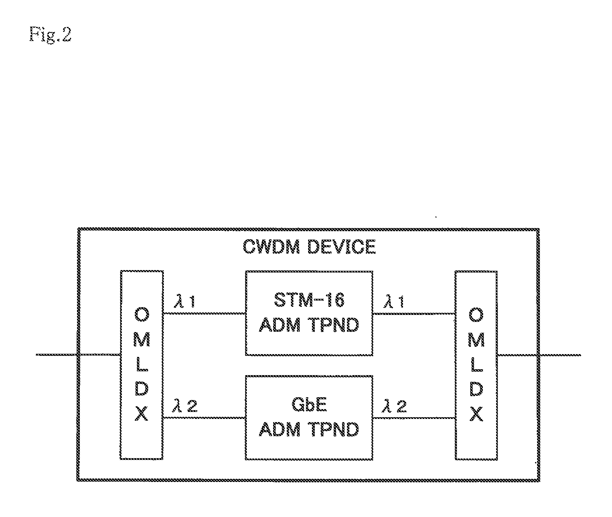

However, in the CWDM device shown in FIG. 1, a total of two cases are required: one case for the CWDM device and one case for the external transponder. Further, according to the CWDM device shown in FIG. 1 and the CWDM device (FIG. 2) disclosed in JP-2001-218240-A, since two transponders are parallelly connected, two cables are required to connect each transponder and a multiplexer. Consequently, when simultaneously performing communication corresponding to a plurality of standards, there is the problem that, in comparison to performing communication that corresponds to only a single communication standard, the costs are increased by the amount of the extra cable and case.

### SUMMARY OF THE INVENTION

An exemplary object of the present invention is to provide technology that performs communication that supports a plurality of communication standards at a low cost.

To achieve the above object, according to an exemplary aspect of the invention there is provided a communication device that includes first transceiver means that transmits/receives a first signal corresponding to a first communication standard in a frame of the first communication standard, and second transceiver means that, with a clock that is synchronized with the first transceiver means, processes a second signal corresponding to a second communication standard and transmits/receives the second signal in a frame of the first communication standard.

A communication system of the invention includes a plurality of the communication devices of the invention that are connected in a ring shape.

A communication method of the invention is a method in which, first transceiver means transmits/receives a first signal corresponding to a first communication standard in a frame of the first communication standard, and second transceiver means, with a clock that is synchronized with the first transceiver means, processes a second signal corresponding to a second communication standard and transmits/receives the second signal in a frame of the first communication standard.

The above and other objects, features, and advantages of the present invention will become apparent from the following description with references to the accompanying drawings which illustrate examples of the present invention.

### BRIEF DESCRIPTION OF THE DRAWINGS

FIG. 1 is an overall view that shows the configuration of a common CWDM device;
FIG. 2 is an overall view that shows the configuration of a common CWDM device;
FIG. 3 is an overall view that shows the configuration of a CWDM device according to a first exemplary embodiment;
FIG. 4 is an overall view that shows the configuration of a CWDM device according to a modification example;
FIG. 5 is an overall view that shows the configuration of a communication system according to a second exemplary embodiment;
FIG. 6 is a view that illustrates the flow of signals in a communication system according to the second exemplary embodiment; and
FIG. 7 is an overall view that shows the configuration of a CWDM device according to the second exemplary embodiment.

### DETAILED DESCRIPTION OF THE PREFERRED EMBODIMENTS:

### (First Exemplary Embodiment)

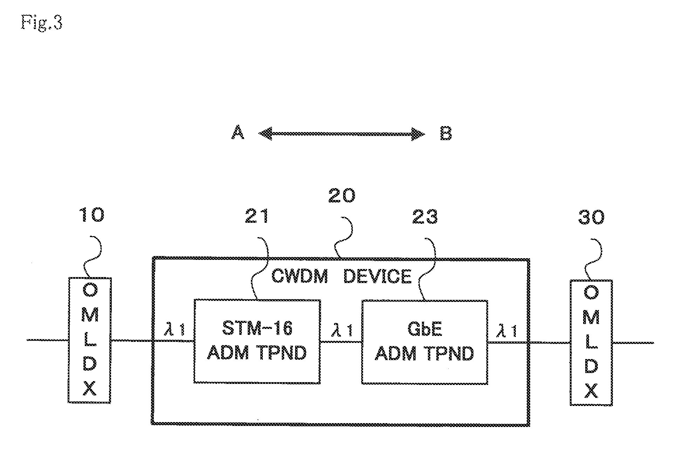

A first exemplary embodiment for implementing the present invention will now be described in detail with reference to FIG. 3.

FIG. 3 is an overall view showing the configuration of CWDM device 20 of the present exemplary embodiment. CWDM device 20 is a communication apparatus that transmits/receives a plurality of signals that have been subjected to wavelength multiplexing. Referring to FIG. 3, CWDM device 20 includes transponder 21 and transponder 23. CWDM device 20 is connected by an optical fiber cable to OMLDX 10 and OMLDX 30. These apparatuses are serially connected using a single-core connection by an optical fiber cable in the order of OMLDX 10, transponder 21, transponder 23, and OMLDX 30 from the A direction towards the B direction in the figure.

Transponder 21 is an ADM (Add Drop Multiplexing) transponder that includes a communication interface that transmits/receives SDH standard signals in STM (Synchronous Transport Module)-16 units (approximately 2.4 Gbps).

Transponder 21 receives multiplexed optical signals from OMLDX 10 and transponder 23, and converts the optical signals into electrical signals. Transponder 21 cross-connects channels, that carry the signals that have been converted into electrical signals to each other. Transponder 21 then converts the cross-connected electrical signals into optical signals, and transmits the optical signals to OMLDX 10 or transponder 23.

When a node that performs SDH communication is connected, transponder 21 multiplexes a signal for SDH communication from the node or separates a signal for SDH communication to the node.

Transponder 23 is an ADM transponder that includes a communication interface for GbE communication.

Transponder 23 receives multiplexed optical signals from OMLDX 30 and transponder 21, and converts the signals into electrical signals. Transponder 23 cross-connects channels, that carry the signals that have been converted into electrical signals to each other. Transponder 21 then converts the cross-connected. Transponder 23 then converts the cross-connected electrical signals into optical signals, and transmits the optical signals to OMLDX 30 or transponder 21.

At this time, transponder 23 multiplexes a signal for GbE communication that has a clock synchronized with a signal for SDH communication into a signal for SDH communication. Further, transponder 23 separates a signal for GbE communication from an optical signal into which a signal for GbE communication has been multiplexed from OMLDX 30. For example, transponder 23 stores an Ethernet frame in a GFP frame and maps that frame into an SDH frame, or extracts an Ethernet frame stored in a GFP frame that has been mapped into an SDH frame.

Thus, by synchronizing the clock and using a GFP frame format, CWDM device 20 can transmit/receive signals of a plurality of communication standards with channels of the same wavelength.

In this connection, as long as transponder 21 includes a function that transmits/receives a signal corresponding to a predetermined communication standard, transponder 21 may be a different communication apparatus. Further, as long as transponder 23 is an apparatus that includes a function that multiplexes a signal of a different communication standard for which a clock is synchronized, transponder 23 may be a different communication apparatus. Multiplexing by transponder 23 may be a method other than a method using a GFP frame format.

As described above, according to the present exemplary embodiment, transponder 21 transmits/receives a received signal and a signal for SDH communication and, with a clock synchronized with transponder 21, processes a signal for GbE communication and transmits/receives a signal for GbE communication in an SDH frame. Since it is possible to transmit signals corresponding to a plurality of communication standards on the same wavelength, the rental charge of dark fiber can be significantly reduced and communication corresponding to a plurality of communication standards can be performed at a low cost. Further, since only one case is required, in comparison to a configuration in which a transponder is externally connected as shown in FIG. 1, the installation space is reduced, and the power consumption and size of the device can be reduced.

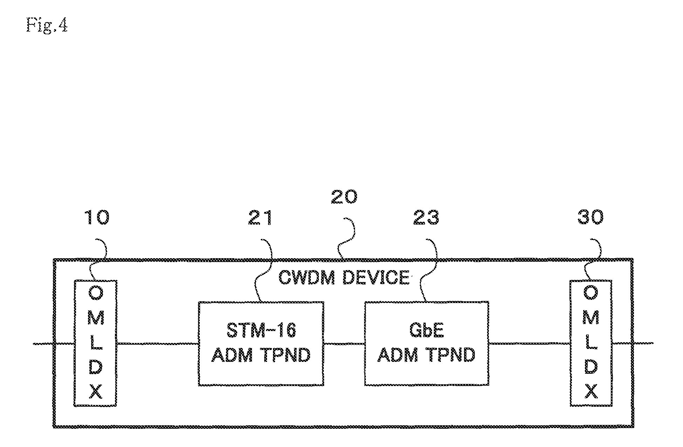

In this connection, although according to the above described exemplary embodiment a configuration is adopted in which OMLDX (10 and 30) are provided outside CWDM device 20, a configuration may also be adopted in which OMLDX (10 and 30) are provided inside the CWDM device as shown in FIG. 4.

The CWDM device is not limited to use of an optical fiber cable, and naturally the CWDM device may also use a coaxial cable and carry out transmitting/receiving, multiplexing, and separation of electrical signals.

### (Second Exemplary Embodiment)

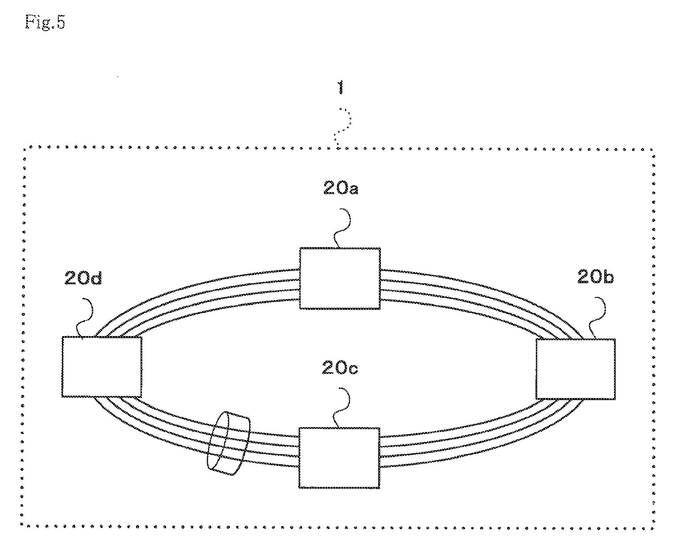

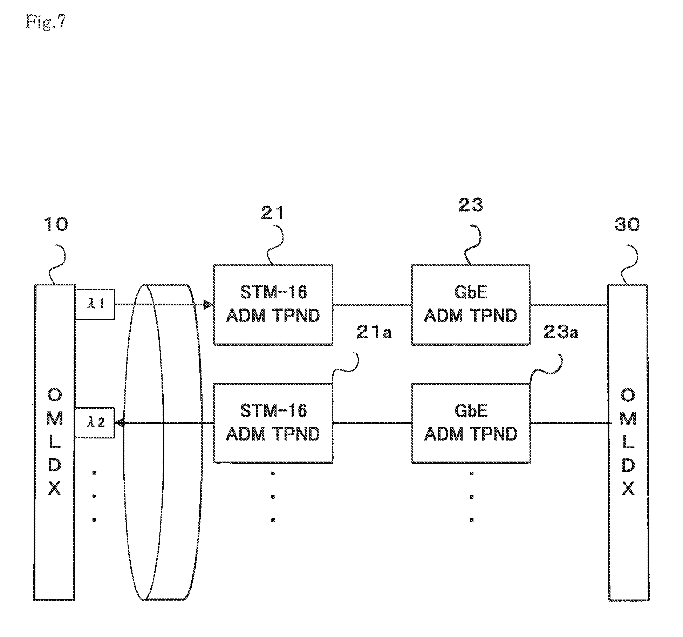

A second exemplary embodiment will now be described in detail referring to F!G. 5 to FIG. 7. FIG. 5 is an overall view that shows the configuration of communication system 1 according to the present exemplary embodiment. Communication system 1 performs communication that corresponds to a plurality of communication standards and improves reliability so that operation can be continued even when a communication failure occurs. Referring to FIG. 5, communication system 1 includes CWDM devices 20a, 20b, 20c and 20d. These CWDM devices (20a, 20b, 20c, and 20d) have the same configuration as CWDM device 20 of the first exemplary embodiment.

CWDM devices 20a, 20b, 20c, and 20d are connected using a single-core connection in a ring shape by an optical fiber cable. A plurality of nodes such as clients or servers are connected to communication system 1. In FIG. 5, four solid lines represent a plurality of channels that have each been subjected to wavelength multiplexing, and a single solid line represents two bidirectional channels.

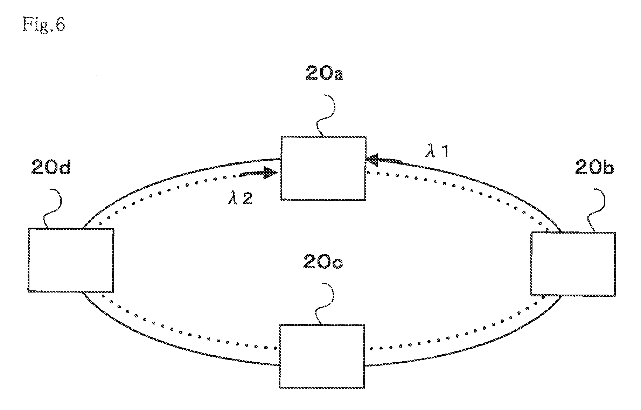

As shown in FIG. 6, in communication system 1 the same traffic flows in mutually opposite directions in a current system channel (a channel corresponding to wavelength λ1) and a standby system channel (a channel corresponding to wavelength λ2), and when a communication failure occurs in the current system channel, the current system channel is switched to the standby system channel and operation is continued. In FIG. 6, the solid line represents the current system channel and the dotted line represents the standby system channel. More specifically, communication system 1 implements ring protection according to the UPSR (Unidirectional Path Switching Ring) system.

FIG. 7 is a block diagram showing the configuration of CWDM device 20a. Referring to FIG. 7, the CWDM device includes transponders 21 and 23 for current system channel (λ1) and transponders 21 a and 23a for standby system channel (λ2). When the number of current system channels and standby system channels is three or more, respectively, an additional set of transponders is further provided for each channel.

In this connection, communication system 1 can perform recovery with respect to a communication failure by a method other than UPSR, such as a BLSR (Bidirectional Line Switching Ring) method, and the topology of communication system 1 is not limited to a ring shape.

As described above, according to the present exemplary embodiment, because communication system 1 has a single-core connection configuration, a communication system that requires two rings with the CWDM device shown in FIG. 1 or FIG. 2 can be implemented with one ring, and it is therefore possible to save on the cost of devices and on dark fiber charges and implement communication for a plurality of standards at a low cost. Further, since communication system 1 implements a ring protection function, the communication reliability is improved.

While preferred exemplary embodiments of the present invention have been described using specific terms, such description is for illustrative purposes only, and it is to be understood that changes and variations may be made without departing from the spirit or scope of the following claims.

## Claims

1. A communication device, comprising:
first transceiver means that transmit/receive a first signal corresponding to a first communication standard in a frame of the first communication standard; and
second transceiver means that, with a clock synchronized with the first transceiver means, process a second signal corresponding to a second communication standard and transmit/receive the second signal in a frame of the first communication standard.

2. The communication device according to claim 1, wherein the second transceiver means turn the second signal into a GFP (Generic Frame Procedure) frame and maps the turned signal into a frame of the first communication standard.

3. The communication device according to claim 1 or 2, wherein the first communication standard is SDH (Synchronous Digital Hierarchy).

4. The communication device according to one of claims 1 to 3, wherein the second communication standard is Gigabit Ethernet.

5. The communication device according to one of claims 1 to 4, wherein the first transceiver is a transponder.

6. The communication device according to one of claims 1 to 5, wherein the second transceiver is a transponder.

7. A communication system that includes a plurality of communication devices according to one of claims 1 to 6 connected in a ring shape.

8. The communication system according to claim 7, wherein the communication system performs ring protection according to a UPSR (Unidirectional Path Switching Ring) system.

9. A communication method, in which:
a first transceiver transmits/receives a first signal corresponding to a first communication standard in a frame of the first communication standard; and
a second transceiver, with a clock synchronized with the first transceiver, processes a second signal corresponding to a second communication standard and transmits/receives the second signal in a frame of the first communication standard.

10. The method of claim 9 further comprising the steps as performed by the features additionally defined in one of claims 2-8.
